# FASCICULE DE BREVET EUROPEEN

(11) **EP 2 998 709 B1**
(45) Date de publication et mention de la délivrance du brevet: **01.11.2017**
(21) Numéro de dépôt: 15183769.7
(22) Date de dépôt: 03.09.2015
(51) Int. Cl.: G01D 11/24, G01D 11/30

(54) **CAPTEUR DE PROXIMITÉ POUR AÉRONEF DOTÉ D'UN ASSEMBLAGE ÉTANCHE PARTICULIER**
NÄHERUNGSSENSOR FÜR LUFTFAHRZEUG, DAS MIT EINER BESONDEREN WASSERDICHTEN ANORDNUNG AUSGESTATTET IST
PROXIMITY SENSOR FOR AIRCRAFT, PROVIDED WITH A SPECIAL SEALED ASSEMBLY

(30) Priorité: 22.09.2014 FR 1458926
(43) Date de publication de la demande: 23.03.2016
(73) Titulaire: Safran Landing Systems, 78140 Vélizy-Villacoublay (FR)
(72) Inventeur: ATAMAN, Gary, Whitby, Ontario L1P 1L5 (CA)
(74) Mandataire: Lavialle, Bruno François Stéphane

(56) Documents cités:
- EP-A2- 1 901 040
- WO-A1-2007/012072
- DE-A1-102005 060 676
- DE-A1-102007 037 759

## Description

L'invention concerne un capteur et en particulier un système comportant un vérin et un capteur permettant de détecter une position d'un piston du vérin.

### ARRIERE PLAN DE L'INVENTION

Plus particulièrement, l'invention concerne un capteur comportant :
- un boîtier délimitant un volume interne au boîtier et présentant un passage s'étendant entre ce volume interne et une première zone externe au boitier ;
- une pièce mobile à l'intérieur dudit volume interne du boîtier ;
- des moyens de détection d'un déplacement de ladite pièce mobile par rapport au boîtier, ces moyens de détection comportent une portion de détection s'étendant dans le passage, entre ladite première zone externe au boitier et ledit volume interne au boitier, cette portion de détection présentant également une rainure ouverte vers l'extérieur de la portion de détection, cette rainure s'étendant entre ladite première zone externe au boitier et ledit volume interne au boitier.

La portion des moyens de détection de détection qui est disposée dans le passage du boîtier présente une rainure ouverte vers l'extérieur. Cette rainure formée sur les moyens de détection permet un positionnement angulaire de la portion de détection vis-à-vis du boitier.

Un tel capteur peut présenter des disfonctionnements dans des conditions froides car le froid / la glace peuvent s'opposer au coulissement de la pièce mobile dans le volume interne. Les documents DE102005060676 et WO2007/012072 divulguent des capteurs connus ayant un passage étanche.

### OBJET DE L'INVENTION

L'invention a pour objet l'obtention d'un capteur capable de limiter le risque de disfonctionnement lorsqu'il est soumis à de basses températures.

### RESUME DE L'INVENTION

En vue de réaliser cet objet, il est proposé selon l'invention, un capteur du type prédéfini et essentiellement caractérisé en ce qu'il comporte des premiers moyens d'étanchéité disposés autour de la portion de détection et placés à l'intérieur du passage, ces premiers moyens d'étanchéité étant agencés pour interdire le passage de fluide entre le volume interne et la première zone externe au boitier via ladite rainure.

Comme les moyens d'étanchéité interdisent le passage de fluide via la rainure, on limite le risque d'avoir une entrée d'humidité vers le volume interne et par conséquent, on limite le risque de blocage, par de la glace, de la pièce mobile dans ce volume interne.

Grâce à l'invention, on peut utiliser des moyens de détection présentant une rainure pour l'orientation de la portion des moyens de détection par rapport au boitier, tout en limitant le risque de passage d'humidité, via la rainure.

L'invention est particulièrement utile dans des domaines tels que celui de l'aéronautique où les capteurs doivent être normalisés et certifiés avant de pouvoir être utilisés. Grâce à l'invention, tout en fournissant une fonction additionnelle d'étanchéité entre moyens de détection et boitier, on peut utiliser des moyens de détection déjà normalisés et présentant une rainure d'orientation pour orienter les moyens de détection par rapport au boitier. On évite ainsi d'avoir à développer de nouveaux moyens de détection sans rainure ce qui impliquerait d'engager un lourd processus de normalisation.

Le capteur selon l'invention est particulièrement adapté à être intégré sur un atterrisseur d'aéronef pour la détection d'une position d'un piston d'un vérin de l'atterrisseur. En effet, lors de son déplacement, l'aéronef est soumis à d'importantes variations de pression, de température et de taux d'humidité ce qui a tendance à favoriser la formation de gel dans des espaces contenant de l'eau ou de la vapeur d'eau. En limitant le passage de fluide, via la rainure, vers le volume interne du capteur, on limite les risques de disfonctionnement à basse température par blocage de la pièce mobile.

Préférentiellement les premiers moyens d'étanchéité sont adaptés à garantir une étanchéité au passage de fluides tant que la pression différentielle entre le volume interne et la première zone externe n'excède pas 300 kPa.

La valeur de 300 kPa correspond au double de la valeur de 150 kPa qui est le différentiel de pression maximum existant entre une pression atmosphérique mesurée à 0 m d'altitude et une pression atmosphérique mesurée à 12 000 m d'altitude.

Dans un mode de réalisation particulier du capteur selon l'invention, au moins une portion de longueur de la rainure est remplie d'un matériau d'étanchéité agencé pour s'opposer audit passage de fluide entre le volume interne et la première zone externe au boitier via ladite rainure.

Dans un mode de réalisation de l'invention combiné au précédent, les premiers moyens d'étanchéité comportent une bague annulaire assemblée de manière étanche à l'intérieur du passage pour former une chemise de guidage en translation de la portion de détection à l'intérieur du passage et par rapport au boitier. La portion de détection est assemblée de manière étanche à l'intérieur de la bague et la bague assemblée à l'intérieur du passage, la portion de détection assemblée à l'intérieur de la bague forment un ensemble étanche s'opposant au passage de fluide entre le volume interne et la première zone externe.

Ce mode de réalisation permet d'avoir une interface entre la portion de détection pénétrant dans le passage du boitier et la surface interne du boitier. Cette interface est utile par exemple pour éviter que le matériau d'étanchéité présent dans la rainure ne vienne en contact contre une surface du boitier lors de l'assemblage ou du désassemblage des moyens de détection.

On limite ainsi le risque d'endommager le matériau d'étanchéité présent dans la rainure.

En combinaison avec le précédent mode de réalisation du capteur selon l'invention, les premiers moyens d'étanchéité comportent un joint annulaire, tel qu'un joint torique, disposé autour de la bague et agencé pour s'opposer au passage de fluide, par l'extérieur de la bague, entre le volume interne et la première zone externe.

L'usage d'un tel joint annulaire permet de faciliter les opérations de maintenance du capteur en permettant le montage et démontage de la bague vis-à-vis du passage.

On peut ainsi assembler ou désassembler les moyens de détection par rapport au boitier tout en les maintenant à l'intérieur de la bague qui les protège.

Idéalement, le joint annulaire est un joint torique placé dans une gorge annulaire formée tout autour du passage et débouchant dans ce passage du boitier.

Dans un mode particulier de réalisation du capteur selon l'invention, les moyens de détection comportent des composants électroniques tels qu'un transistor et/ou un amplificateur et/ou une inductance susceptibles d'être détériorés en cas de contact prolongé avec de la glace ou de l'eau. Pour les protéger, ces composants électroniques sont placés dans un espace étanche situé à l'intérieur de la portion des moyens de détection qui est placée dans le passage du boîtier.

Dans un mode particulier de l'invention, le capteur selon l'invention comporte en outre :
- des moyens d'actionnement passant au travers d'une seconde ouverture formée dans le boîtier, ces moyens d'actionnement étant agencés pour commander le déplacement de ladite pièce mobile située à l'intérieur dudit volume interne depuis une seconde zone externe au boîtier ;
- des seconds moyens d'étanchéité agencés par rapport au boîtier et aux moyens d'actionnement pour s'opposer au passage de fluide provenant de la seconde zone externe vers le volume interne, via la seconde ouverture du boîtier.

L'invention porte aussi sur un système comportant un capteur selon le précédent mode de réalisation de l'invention, ce système comportant en outre un vérin hydraulique comportant un piston et une chambre hydraulique dans laquelle coulisse ce piston, ladite seconde zone externe au boitier et une portion des moyens d'actionnement étant situés à l'intérieur de la chambre hydraulique du vérin de manière qu'un déplacement du piston dans la chambre hydraulique puisse commander le déplacement des moyens d'actionnement et entrainer le déplacement de la pièce mobile dans le volume interne du boitier du capteur.

Dans ce mode de réalisation, les moyens de détection de déplacement de la pièce mobile sont en communication avec le volume interne au boitier du capteur pour détecter le déplacement de cette pièce mobile.

Le volume interne au boitier et la chambre hydraulique sont isolés hydrauliquement l'un de l'autre par les seconds moyens d'étanchéité qui évitent que les moyens de détection ne soient soumis aux fortes pressions hydrauliques exercées dans la chambre du vérin.

Les moyens d'actionnement qui s'étendent en partie dans la chambre du vérin hydraulique permettent de commander le déplacement de la pièce mobile dans le boitier en fonction de la position du piston dans le vérin hydraulique.

Ainsi le capteur selon l'invention peut être utilisé pour déterminer le positionnement d'un piston dans une chambre de vérin hydraulique sans exposer les moyens de détection aux fortes pressions de la chambre hydraulique.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- la figure 1 est une vue en perspective d'un atterrisseur d'aéronef comportant un vérin hydraulique d'extension et rétraction de l'atterrisseur, ce vérin étant équipé d'un capteur selon l'invention pour pouvoir détecter une position de déplacement d'un piston dans une chambre hydraulique du vérin ;
- la figure 2 est une vue en coupe longitudinale d'une portion du vérin hydraulique et du capteur utilisés dans l'atterrisseur illustré à la figure 1, ce capteur permettant de détecter au moins une position de coulissement du piston à l'intérieur du vérin ;

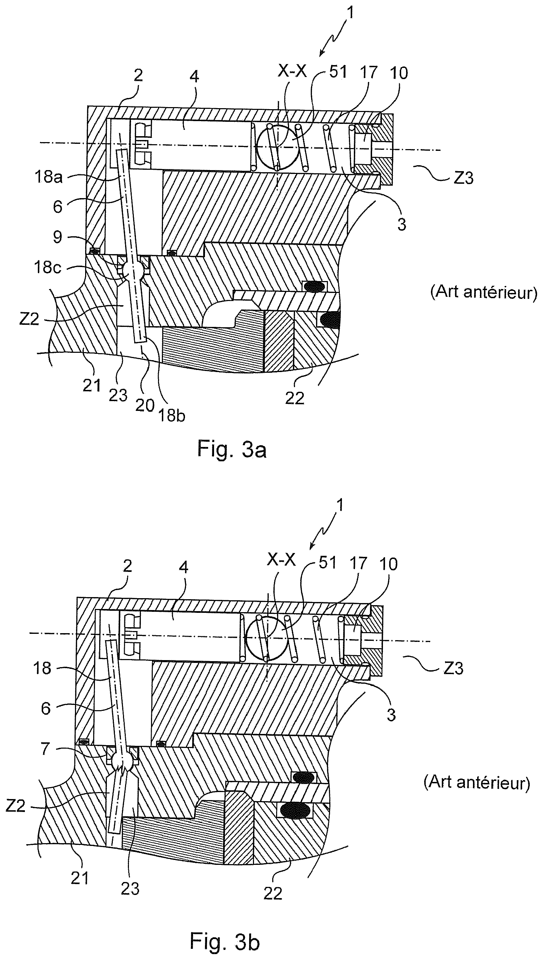

- la figure 3a est une vue en coupe longitudinale d'un capteur de l'art antérieur présentant un volume interne dans lequel coulisse une pièce mobile, ce volume interne au boitier est ouvert et n'est pas étanche ce qui autorise la migration d'eau de l'extérieur du capteur vers le volume interne ;
- la figure 3b est une vue en coupe du capteur de l'art antérieur illustré à la figure 3a, on constate la rupture d'un levier d'actionnement de la pièce mobile, cette rupture résulte du fait que la pièce mobile est bloquée par du gel présent dans le boitier alors que le levier immobilisé par le gel contraint par le piston du vérin hydraulique ;
- la figure 4 est une vue en coupe, selon un plan C-C, du capteur selon l'invention présenté à la figure 2 ;
- la figure 5a, est une vue en perspective des moyens de détection du capteur selon l'invention alors qu'ils sont assemblés sur une platine, ces moyens de détection et la platine sont identiques à ceux visibles sur la figure 4 ;
- la figure 5b est une vue de côté des moyens de détection et de la platine illustrés à la figure 5a ;
- la figure 5c est une vue de face des moyens de détection et de la platine illustrés aux figures 5a et 5b;
- la figure 5d est une vue de dessous des moyens de détection et de la platine illustrés aux figures 5a, 5b et 5c ;
- la figure 6 est une vue en coupe partielle d'un capteur de l'art antérieur où l'on constate la présence d'une rainure formée sur les moyens de détection, cette rainure s'étendant le long d'un passage formé dans le boitier pour permettre l'orientation angulaire de ces moyens de détection par rapport au boitier, un inconvénient de ce capteur est qu'il permet le passage, via la rainure, de fluides vers le volume interne ;
- la figure 7 est une vue en coupe partielle d'un capteur selon l'invention présentant des moyens de détection identiques à ceux du capteur de l'art antérieur, ces moyens de détection comportant notamment une rainure, mais ici les moyens de détection sont assemblés au boitier de manière étanche pour interdire le passage de fluide entre le volume interne et l'extérieur du capteur.

### DESCRIPTION DETAILLEE DE L'INVENTION

Comme indiqué précédemment, l'invention concerne un capteur 1 permettant de détecter une position de coulissement d'un piston 22 d'un vérin hydraulique 21.

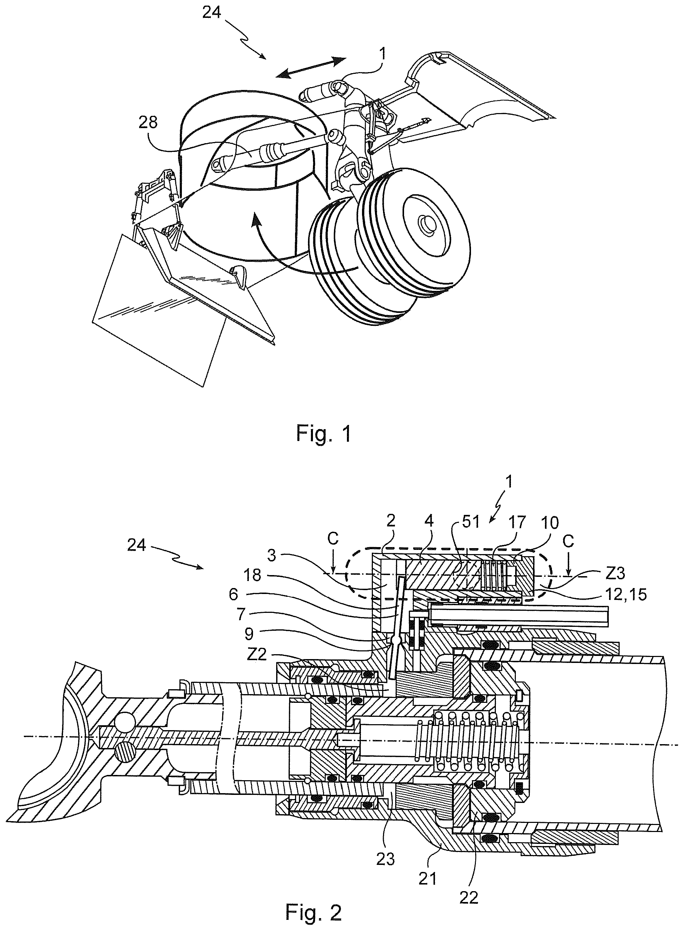

Plus particulièrement, l'invention concerne un système 24 tel qu'un atterrisseur d'aéronef équipé d'un vérin hydraulique 21 pour l'extension et/ou la rétraction de l'atterrisseur d'aéronef par rapport à la cellule de l'aéronef. Comme on le voit sur la coupe longitudinale de la figure 2, ce vérin 21 présente un piston 22 et une chambre hydraulique 23 dans laquelle coulisse ce piston 22.

Le capteur 1 est assemblé de manière étanche contre le corps du vérin 21 afin de détecter au moins une position de coulissement du piston 22 à l'intérieur du corps du vérin 21.

Ce capteur 1 selon l'invention comporte :
- un boîtier 2 délimitant un volume interne 3 au boîtier et présentant un passage 31 s'étendant entre ce volume interne 3 et une première zone externe Z1 au boitier 2 ;
- une pièce mobile 4, formée par exemple par un noyau métallique, située à l'intérieur dudit volume interne 3 du boîtier pour pouvoir y coulisser ;
- des moyens de détection 5 d'un déplacement de ladite pièce mobile 4 par rapport au boîtier 2, ces moyens de détection 5 comportent une portion de détection 51 qui s'étend dans le passage 31, entre la première zone externe Z1 et le volume interne 3. Cette portion de détection 51 présente une rainure latérale 52 ouverte vers l'extérieur de la portion de détection 51 et s'étendant entre la première zone externe Z1 et le volume interne 3 au boitier.

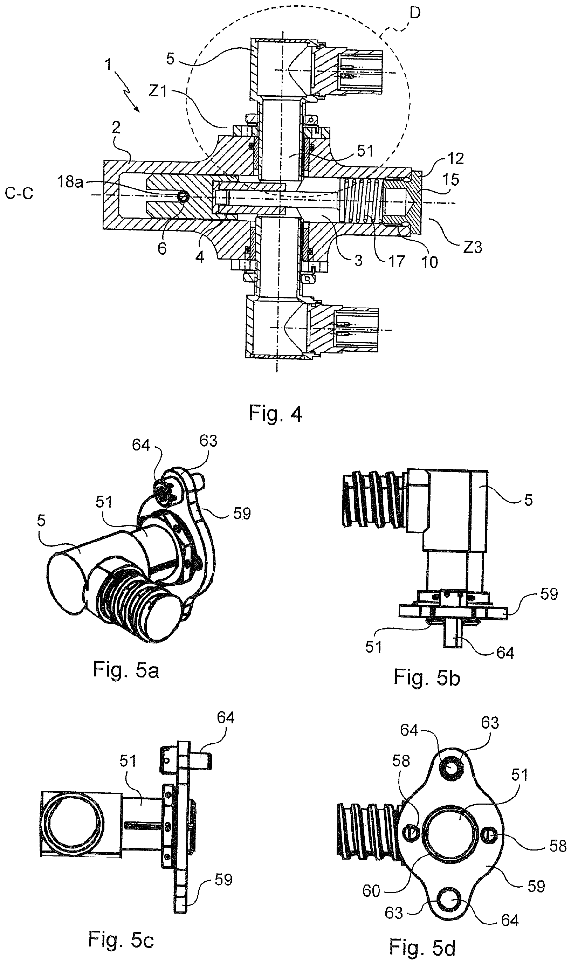

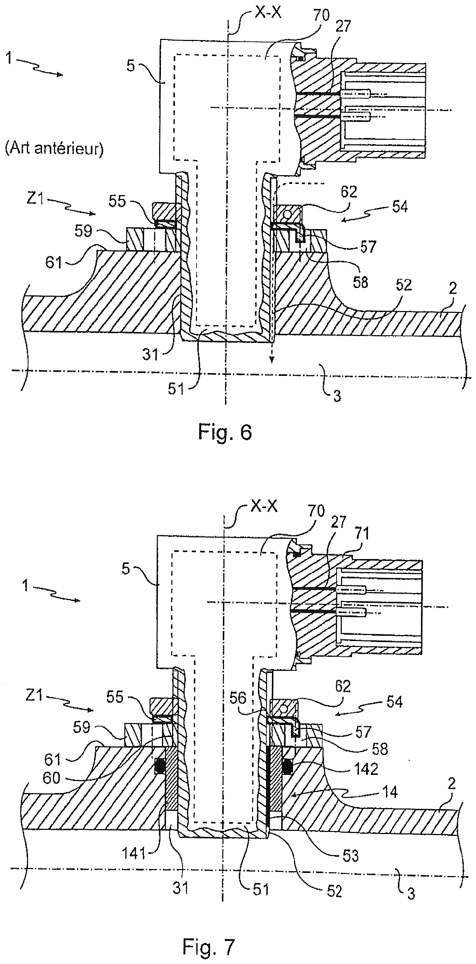

Comme on le voit sur la figure 2 et en particulier sur les vues en coupe des figures 4 et 7, le capteur 1 selon l'invention comporte des premiers moyens d'étanchéité 14 disposés autour de la portion de détection 51 et placés à l'intérieur du passage 31. Ces premiers moyens d'étanchéité 14 sont agencés pour interdire le passage de fluide entre le volume interne 3 et la première zone externe Z1 via ladite rainure 52.

Les moyens de détection 5 comportent des composants électroniques placés dans un espace étanche 70 s'étendant à l'intérieur de la portion 51 des moyens de détection 5 qui est placée dans le passage 31 du boîtier. Cet espace étanche 70 permet de protéger les composants électroniques des effets liés à des variations de pression dans le volume interne 3 ou au niveau de la première zone externe Z1.

Ces composants électroniques sont agencés pour générer un signal représentatif d'une position relative de coulissement de la pièce mobile 4 dans le volume interne 3.

Ces composants électroniques peuvent constituer un capteur magnétique ou capacitif détectant la proximité de la pièce 4 par rapport aux composants.

La transmission de ce signal peut se faire via des moyens filaires 27 reliés aux composants électroniques et passant au travers d'une paroi étanche 71 délimitant l'espace étanche 70. Comme on le voit en particulier sur la figure 7, ces moyens filaires 27 comportent une connectique formant une prise accessible depuis l'extérieur du capteur 1 pour être branchée à une prise complémentaire. Ceci favorise l'interchangeabilité du capteur.

Le passage 31 formé au travers de la paroi du boitier 2 est de forme cylindrique et permet d'introduire la portion 51 des moyens de détection 5 qui est aussi cylindrique.

Cette portion de détection 51 qui est de forme cylindrique droite s'étend autour et le long d'un axe de symétrie longitudinal X-X. Une rainure rectiligne 52 s'étend parallèlement à cet axe de symétrie longitudinal X-X et le long de la forme cylindrique de la portion de détection 51.

Cette portion de détection 51 est assemblée de manière étanche à l'intérieur d'une bague annulaire 141, cette bague 141 est elle-même assemblée de manière étanche à l'intérieur du passage 31. Ainsi, lorsqu'ils sont assemblés ensemble, la portion de détection 51, la bague 141 et le boitier 2 forment un ensemble étanche s'opposant au passage de fluide entre le volume interne 3 et la première zone externe Z1.

Pour cela, la bague annulaire 141 est de forme complémentaire du passage 31 et un joint torique est placé dans une gorge annulaire 142 formée dans le passage 31, à la périphérie du passage. Ce joint torique 142 s'étend autour de la bague 141 de manière à réaliser l'étanchéité tout autour de la bague, entre la bague et le boitier 2. Cette bague et le passage sont ajustés pour permettre d'insérer ou extraire la bague sans endommager, ni le passage 31, ni le joint 142. Ainsi, la bague 141 forme une chemise de guidage en translation de la portion de détection 51 à l'intérieur du passage 31 et par rapport au boitier 2.

Au moins une portion de longueur de la rainure 52 est remplie d'un matériau d'étanchéité 53 agencé pour s'opposer au passage de fluide entre le volume interne 3 et la première zone externe Z1 via la rainure 52.

Ce matériau d'étanchéité 53 peut être un polymère coulé dans la rainure tel que du silicone ou un polymère thermoplastique. On note que la bague et la portion 51 des moyens de détection peuvent être collées entre elles.

On peut aussi prévoir qu'un joint annulaire s'étende à l'intérieur de la bague pour enserrer la portion 51 et empêcher les fuites entre la bague et la portion 51.

Des moyens de fixation 54 sont agencés à l'extérieur du boitier 2 pour assembler les moyens de détection 5 avec le boitier 2.

Les moyens de fixation 54 comportent une platine 59 présentant une perforation filetée 60 dans laquelle est vissée une partie des moyens de détection 5 qui est à l'extérieur du boitier 2. Pour cela, cette perforation 60 présente un filetage femelle complémentaire d'un filetage mâle externe aux moyens de détection 5. Une partie de la rainure 52 qui est à l'extérieur du passage passe au travers de cette platine 59 et s'étend jusqu'à l'extérieur du capteur. La platine 59 est fixée contre une surface externe 61 du boitier 2 qui, dans le cas présent est une surface plane.

La perforation filetée 60 est de dimensions telles qu'elle s'oppose au passage de la bague 141 au travers de la perforation 60. Ainsi, la platine 59 forme une butée axiale s'opposant à la sortie de la bague hors du passage 31. Comme on le voit en particulier, sur les figures 5a, 5b, 5c et 5d, la platine 59 présente des perforations latérales 63 disposées autour de la perforation filetée 60 de manière à permettre le passage de boulons de serrage 64. Ces boulons de serrage 64 sont filetés dans des perforations complémentaires réalisées dans le boitier 2. Ces boulons de serrage 64 permettent de serrer la platine 59 contre le boitier 2.

Les moyens de fixation 54 des moyens de détection 5 présentent aussi une rondelle 55, coaxiale de l'axe X-X et dans laquelle passe une partie des moyens de détection 5 qui est à l'extérieur du boitier 2. Cette rondelle 55 présente des languettes centrale 56 et périphérique 57, la languette centrale 56 pénètre à l'intérieur de la rainure 52 de manière à interdire une rotation relative entre la rondelle 55 et les moyens de détection 5. La languette périphérique 57 pénètre dans un logement complémentaire 58 fixe par rapport au boitier 2 de manière à interdire la rotation relative entre la rondelle 55 et le boitier 2. Cette rondelle 55 est ainsi disposée pour indexer à rotation les moyens de détection 5 par rapport au boitier 2.

Les moyens de fixation 54 comportent aussi un écrou de serrage 62 de la rondelle 55 contre la platine 59. Cet écrou 62 est vissé sur la partie des moyens de détection 5 qui est à l'extérieur du boitier 2 et dans laquelle s'étend une partie de la rainure 52.

Le logement 58 dans lequel pénètre la languette périphérique 57 de la rondelle 55 est formé au travers de la platine 59. Ce logement 58 est réalisé à distance de la perforation filetée 60 dans laquelle est vissée la partie des moyens de détection 5 qui est à l'extérieur du boitier 2. Comme la rondelle 55 est placée entre l'écrou 62 et la platine 59 qui sont filetés sur le filetage mâle des moyens de détection 5, on a un effet de positionnement axial des moyens de détection 5 par rapport au boîtier 2. Les languettes de la rondelle ont un effet d'immobilisation en rotation, autour de l'axe X-X, des moyens de détection 5 par rapport au boitier 2.

Le boitier présente en outre des seconde et troisième ouvertures 7 et 10 s'étendant entre le volume 3 et l'extérieur du boitier.

Des moyens d'actionnement 6 passent au travers de la seconde ouverture 7 du boîtier 2. Ces moyens d'actionnement 6 sont agencés pour commander le déplacement de ladite pièce mobile 4 depuis une seconde zone externe Z2 au boîtier 2.

Des seconds moyens d'étanchéité 9 sont agencés par rapport au boîtier 2 et aux moyens d'actionnement 6 pour s'opposer au passage de fluide provenant de la seconde zone externe Z2 au boîtier 2 vers ledit volume interne 3 et via la seconde ouverture 7.

L'assemblage étanche entre le capteur 1 et le corps du vérin 21 est réalisé :
- de manière que la seconde zone externe Z2 et une portion des moyens d'actionnement 6 soient situés à l'intérieur de la chambre hydraulique 23 du vérin 21 ; et
- de manière qu'un déplacement du piston 22 dans la chambre hydraulique puisse commander le déplacement des moyens d'actionnement 6 et entrainer le déplacement / coulissement de la pièce mobile 4 dans le volume interne 3 du boitier.

Pour cela, les moyens d'actionnement 6 qui passent au travers de la seconde ouverture 7 comportent un levier 18 présentant des première et seconde parties 18a, 18b situées de part et d'autre d'une portion sphérique 18c du levier.

La première partie de levier 18a se trouve à l'intérieur du volume interne 3 et vient en appui contre la pièce mobile 4. La seconde partie 18b du levier 18 s'étend dans la seconde zone externe Z2 et est agencée pour que le piston 22 puisse venir en contact contre cette seconde partie 18b au moins lorsque ce piston 22 arrive dans une de ses positions de fin de course à l'intérieur du vérin 21.

Un presse étoupe enserre la portion sphérique 18c du levier afin de lui permettre de pivoter par rapport à ce presse étoupe selon au moins un axe de pivotement perpendiculaire à un axe principal 20 du levier 18. On note que le levier 18 est une pièce s'étendant longitudinalement le long de cet axe principal 20, ce levier étant préférentiellement une pièce de révolution. Ce presse étoupe appartient aux seconds moyens d'étanchéité 9 et réalise une étanchéité contre la portion sphérique 18c du levier 18, tout autour de cette portion sphérique 18c pour interdire le passage de fluide entre la seconde zone Z2 et le volume interne 3.

La troisième ouverture 10 est réalisée pour insérer la pièce mobile 4 qui est de forme cylindrique dans le volume interne 3.

Des troisièmes moyens d'étanchéité 12 comprenant un bouchon fileté 15 sont agencés pour interdire le passage de fluide entre le volume interne 3 et une troisième zone externe Z3 au boitier. Ce bouchon 15 est assemblé par filetage dans la troisième ouverture 10 du volume interne 3.

Les premiers, deuxièmes et troisièmes moyens d'étanchéité 14, 9, 12 sont dimensionnés pour pouvoir résister à un différentiel de pression d'au moins 300 kPa, cette valeur correspondant à la différence entre une pression régnant à l'intérieur du volume interne et une pression régnant au niveau de la troisième zone externe Z3 au boitier 2.

On note que cette valeur de 300 kPa correspond approximativement au double du différentiel de pression existant entre une pression atmosphérique mesurée à 0 m d'altitude et une pression atmosphérique mesurée à 12 000 m d'altitude.

Ainsi, les premiers, seconds et troisièmes moyens d'étanchéité résistent aux variations de pression ambiante auxquelles est soumis l'aéronef lors de ses vols.

Comme illustré à la figure 2, un ressort de rappel 17 exerce sur la pièce mobile 4, un effort élastique de rappel vers une première position de coulissement dans le volume interne 3. Cette première position correspond ici à la position occupée par cette pièce 4 lorsque le piston 22 est dans une position éloignée de ses fins de course. Ce ressort de rappel 17 est comprimé entre le bouchon 15 et la pièce mobile 4 contre lesquels il est en appui. Le ressort 17 permet un retour élastique du levier 18 vers une position dans laquelle il se trouve lorsqu'il n'est pas en contact avec le piston 22.

Le système selon l'invention est placé pour détecter le moment où l'atterrisseur est complètement sorti / déployé et où la contrefiche 28 de l'atterrisseur doit être bloquée pour éviter un retour involontaire de l'atterrisseur vers sa position rétractée.

Comme illustré à la figure 4, le capteur selon l'invention comporte deux moyens de détection 51 placés de part et d'autre du boitier pour détecter la position de la pièce mobile 4 dans le volume interne 3. Chacun de ces moyens de détections passe dans un passage 31 qui lui est propre. Ces passages 31 sont en vis-à-vis l'un de l'autre. Les moyens de détections 51 ainsi positionnés sont redondants pour pouvoir sécuriser la détection de la position de déplacement de la pièce 4. On note que ces moyens de détection peuvent aussi être agencés pour interagir entre eux en fonction de la position de la pièce 4 par rapport à ces moyens de détection 5.

## Revendications

1. Capteur (1) comportant :
- un boîtier (2) délimitant un volume interne (3) au boîtier et présentant un passage (31) s'étendant entre ce volume interne et une première zone externe (Z1) au boitier ;
- une pièce mobile (4) à l'intérieur dudit volume interne (3) du boîtier ;
- des moyens de détection (5) d'un déplacement de ladite pièce mobile (4) par rapport au boîtier (2), ces moyens de détection (5) comportent une portion de détection (51) s'étendant dans le passage (31), entre ladite première zone externe (Z1) au boitier et ledit volume interne (3) au boitier, cette portion de détection (51) présentant également une rainure (52) ouverte vers l'extérieur de la portion de détection (51) pour l'orientation de la portion des moyens de détection (5) par rapport au boîtier (2), cette rainure (52) s'étendant entre ladite première zone externe (Z1) au boitier et ledit volume interne (3) au boitier, **caractérisé en ce qu'**il comporte des premiers moyens d'étanchéité (14) disposés autour de la portion de détection (51) et placés à l'intérieur du passage (31), ces premiers moyens d'étanchéité (14) étant agencés pour interdire le passage de fluide entre le volume interne (3) et la première zone externe (Z1) au boitier (2) via ladite rainure (52).

2. Capteur (1) selon la revendication 1, dans lequel au moins une portion de longueur de la rainure (52) est remplie d'un matériau d'étanchéité (53) agencé pour s'opposer audit passage de fluide entre le volume interne (3) et la première zone externe (Z1) au boitier via ladite rainure (52).

3. Capteur selon la revendication 2, dans lequel ces premiers moyens d'étanchéité (14) comportent une bague annulaire (141) assemblée de manière étanche à l'intérieur du passage (31) pour former une chemise de guidage en translation de la portion de détection (51) à l'intérieur du passage (31) et par rapport au boitier (2), la portion de détection (51) étant assemblée de manière étanche à l'intérieur de la bague (141), la bague (141) assemblée à l'intérieur du passage (31) et la portion de détection (51) assemblée à l'intérieur de la bague (141) formant un ensemble étanche s'opposant au passage de fluide entre le volume interne (3) et la première zone externe (Z1).

4. Capteur (1) selon la revendication 3, dans lequel ces premiers moyens d'étanchéité (14) comportent un joint annulaire (142) disposé autour de la bague et agencé pour s'opposer au passage de fluide, par l'extérieur de la bague (141), entre le volume interne (3) et la première zone externe (Z1).

5. Capteur selon l'une quelconque des revendications précédentes, dans lequel la portion de détection (51) est de forme cylindrique droite et s'étend autour et le long d'un axe de symétrie longitudinal (X-X), ladite rainure (52) étant rectiligne et s'étendant parallèlement à cet axe de symétrie longitudinal (X-X).

6. Capteur (1) selon l'une quelconque des revendications précédentes, comportant en outre des moyens de fixation (54) agencés à l'extérieur du boitier (2) pour assembler les moyens de détection (5) avec le boitier (2), ces moyens de fixation (54) présentent une rondelle (55) dans laquelle passe une partie des moyens de détection (5) qui est à l'extérieur du boitier (2) dans laquelle s'étend une partie de ladite rainure (52), cette rondelle (55) présente des languettes centrale (56) et périphérique (57), la languette centrale (56) pénètre à l'intérieur de la rainure (52) de manière à interdire une rotation relative entre la rondelle (55) et les moyens de détection (5), la languette périphérique (57) pénètre dans une logement complémentaire (58) fixe par rapport au boitier (2) de manière à interdire une rotation relative entre la rondelle (55) et le boitier (2), cette rondelle (55) étant disposée pour indexer à rotation les moyens de détection (5) par rapport au boitier (2).

7. Capteur (1) selon la revendication 6, dans lequel les moyens de fixation (54) comportent une platine (59) présentant une perforation filetée (60) dans laquelle est vissée la partie des moyens de détection (5) qui est à l'extérieur du boitier (2) et dans laquelle s'étend une partie de ladite rainure (52), cette platine (59) étant par ailleurs fixée contre une surface externe (61) du boitier (2).

8. Capteur (1) selon les revendications 6 et 7, dans lequel les moyens de fixation (54) comportent un écrou de serrage (62) de la rondelle (55) contre la platine (59), cet écrou (62) étant vissé sur la partie des moyens de détection (5) qui est à l'extérieur du boitier (2) et dans laquelle s'étend une partie de la rainure (52).

9. Capteur selon l'une quelconque des revendications précédentes comportant en outre :
- des moyens d'actionnement (6) passant au travers d'une seconde ouverture (7) formé dans le boîtier (2), ces moyens d'actionnement (6) étant agencés pour commander le déplacement de ladite pièce mobile (4) située à l'intérieur dudit volume interne (3) depuis une seconde zone externe (Z2) au boîtier (2) ;
- des seconds moyens d'étanchéité (9) agencés par rapport au boîtier (2) et aux moyens d'actionnement (6) pour s'opposer au passage de fluide provenant de la seconde zone externe (Z2) au boîtier (2) vers ledit volume interne (3) du boîtier, via ladite seconde ouverture (7) du boîtier,
- une troisième ouverture (10) s'étendant entre ledit volume interne (3) du boîtier (2) et une troisième zone externe (Z3) au boîtier qui est distante desdites première et seconde zones externes (Z1, Z2) du boitier ; et
- des troisièmes moyens d'étanchéité (12) agencés pour s'opposer au passage de fluide entre ledit volume interne (3) du boitier (2) et la troisième zone externe (Z3) via ladite troisième ouverture (10).

10. Capteur selon l'une au moins des revendications 1 à 9, dans lequel les moyens de détection (5) comportent des composants électroniques qui sont situés à l'écart dudit volume interne (3) et s'étendent dans ledit passage (31) du boitier.

11. Capteur selon la revendication 9, dans lequel les troisièmes moyens d'étanchéité (12) comportent un bouchon (15) assemblé dans la troisième ouverture (10) du volume interne (3), ce bouchon (15) étant assemblé au boitier (2) par un filetage.

12. Capteur selon la revendication précédente, dans lequel la pièce mobile (4) est coulissante à l'intérieur dudit volume interne (3) du boîtier et un ressort de rappel (17) exerce sur cette pièce mobile (4) un effort élastique de rappel vers une première position, ce ressort de rappel (17) étant comprimé entre le bouchon (15) et la pièce mobile (4) contre lesquels il est en appui.

13. Système comportant un capteur selon l'une quelconque des revendications précédentes combinée à la revendication 9, ce système comportant en outre un vérin hydraulique (21) comportant un piston (22) et une chambre hydraulique (23) dans laquelle coulisse ce piston (22), ladite seconde zone externe (Z2) au boitier (2) et une portion des moyens d'actionnement (6) étant situés à l'intérieur de la chambre hydraulique (23) du vérin (21) de manière qu'un déplacement du piston (22) dans la chambre hydraulique (23) puisse commander le déplacement des moyens d'actionnement (6) et entrainer le déplacement de la pièce mobile (4) dans le volume interne (3) du boitier (2) du capteur (1).

14. Système selon la revendication 13, dans lequel le vérin hydraulique (21) est un vérin hydraulique d'extension et rétraction d'un atterrisseur d'aéronef.

## Patentansprüche

1. Sensor (1), umfassend:
- ein Gehäuse (2), das ein im Inneren des Gehäuses befindliches Innenvolumen (3) begrenzt und einen Durchgang (31) aufweist, der sich zwischen diesem Innenvolumen und einer außerhalb des Gehäuses befindlichen ersten äußeren Zone (Z1) erstreckt;
- ein bewegliches Teil (4) im Inneren des Innenvolumens (3) des Gehäuses;
- Detektionsmittel (5) zum Erfassen einer Verschiebung des genannten beweglichen Teils (4) in Bezug auf das Gehäuse (2), wobei diese Detektionsmittel (5) einen Detektionsabschnitt (51) umfassen, der sich in dem Durchgang (31) zwischen der außerhalb des Gehäuses befindlichen ersten äußeren Zone (Z1) und dem im Inneren des Gehäuses befindlichen Innenvolumen (3) erstreckt, wobei dieser Detektionsabschnitt (51) ebenfalls eine Nut (52) aufweist, die zur Außenseite des Detektionsabschnitts (51) hin zwecks Ausrichtung des Abschnittes der Detektionsmittel (5) in Bezug auf das Gehäuse (2) offen ist, wobei sich diese Nut (52) zwischen der außerhalb des Gehäuses befindlichen ersten äußeren Zone (Z1) und dem im Inneren des Gehäuses befindlichen Innenvolumen (3) erstreckt, **dadurch gekennzeichnet, dass** er erste Dichtungsmittel (14) umfasst, die um den Detelctionsabschnitt (51) herum angeordnet und im inneren des Durchgangs (31) platziert sind, wobei diese ersten Dichtungsmittel (14) so ausgebildet sind, dass sie den Durchtritt von Fluid zwischen dem Innenvolumen (3) und der außerhalb des Gehäuses (2) befindlichen ersten äußeren Zone (Z1) über die genannte Nut (52) unterbinden.

2. Sensor (1) nach Anspruch 1, bei dem mindestens ein Abschnitt der Länge der Nut (52) mit einem Dichtungsmaterial (53) gefüllt ist, das so ausgebildet ist, dass es sich dem Durchtritt des Fluids zwischen dem Innenvolumen (3) und der außerhalb des Gehäuses befindlichen ersten äußeren Zone (Z1) über die Nut (52) widersetzt.

3. Sensor nach Anspruch 2, bei dem diese ersten Dichtungsmittel (14) einen ringförmigen Ring (141) umfassen, der auf dichte Weise im Inneren des Durchgangs (31) montiert ist, um eine Buchse zur Translationsführung des Detektionsabschnittes (51) im Inneren des Durchgangs (31) und in Bezug auf das Gehäuse (2) zu bilden, wobei der Detektionsabschnitt (51) auf dichte Weise im Inneren des Ringes (141) montiert ist, wobei der im Inneren des Durchgangs (31) montierte Ring (141) und der im Inneren des Ringes (141) montierte Detektionsabschnitt (51) eine dichte Einheit bilden, die sich dem Durchtritt von Fluid zwischen dem Innenvolumen (3) und der ersten äußeren Zone (Z1) widersetzt.

4. Sensor (1) nach Anspruch 3, bei dem diese ersten Dichtungsmittel (14) eine ringförmige Dichtung (142) umfassen, die um den Ring herum angeordnet und so ausgebildet ist, dass sie sich dem Durchtritt von Fluid zwischen dem Innenvolumen (3) und der ersten äußeren Zone (Z1) über das Äußere des Ringes (141) widersetzt.

5. Sensor nach einem der vorhergehenden Ansprüche, bei dem der Detektionsabschnitt (51) eine gerade zylindrische Form hat und sich um und entlang einer Längssymmetrieachse (X-X) erstreckt, wobei die Nut (52) geradlinig ist und sich parallel zu dieser Längssymmetrieachse (X-X) erstreckt.

6. Sensor (1) nach einem der vorhergehenden Ansprüche, ferner umfassend Befestigungsmittel (54), die außerhalb des Gehäuses (2) ausgebildet sind, um die Detektionsmittel (5) mit dem Gehäuse (2) zu verbinden, wobei diese Befestigungsmittel (54) eine Unterlegscheibe (55) aufweisen, in der ein Teil der Detektionsmittel (5) verläuft, der sich außerhalb des Gehäuses (2) befindet und in dem sich ein Teil der Nut (52) erstreckt, wobei diese Unterlegscheibe (55) zentrale Zungen (56) und Umfangszungen (57) aufweist, wobei die zentrale Zunge (56) derart in das Innere der Nut (52) eindringt, dass sie eine relative Drehung zwischen der Unterlegscheibe (55) und den Detektionsmitteln (5) unterbindet, wobei die Umfangszunge (57) derart in eine in Bezug auf das Gehäuse (2) ortsfeste komplementäre Aufnahme (58) eindringt, dass sie eine relative Drehung zwischen der Unterlegscheibe (55) und dem Gehäuse (2) unterbindet, wobei diese Unterlegscheibe (55) angeordnet ist, um die Detektionsmittel (5) in Bezug auf das Gehäuse (2) in Drehung zu indexieren.

7. Sensor (1) nach Anspruch 6, bei dem die Befestigungsmittel (54) eine Platine (59) umfassen, die eine mit einem Gewinde versehene Lochung (60) aufweist, in die der Teil der Detektionsmittel (5) geschraubt ist, der sich außerhalb des Gehäuses (2) befindet und in dem sich ein Teil der Nut (52) erstreckt, wobei diese Platine (59) ferner an einer Außenfläche (61) des Gehäuses (2) befestigt ist.

8. Sensor (1) nach den Ansprüchen 6 und 7, bei dem die Befestigungsmittel (54) eine Klemmutter (62) zum Festklemmen der Unterlegscheibe (55) an der Platine (59) umfassen, wobei diese Mutter (62) auf den Teil der Detektionsmittel (59) geschraubt ist, der sich außerhalb des Gehäuses (2) befindet und in dem sich ein Teil der Nut (52) erstreckt.

9. Sensor nach einem der vorhergehenden Ansprüche, ferner umfassend:
- Betätigungsmittel (6), die durch eine zweite Öffnung (7) gehen, die in dem Gehäuse (2) ausgebildet ist, wobei diese Betätigungsmittel (6) so ausgebildet sind, dass sie die Verschiebung des im Inneren des Innenvolumens (3) befindlichen beweglichen Teils (4) von einer außerhalb des Gehäuses (2) befindlichen zweiten äußeren Zone (Z2) steuern;
- zweite Dichtungsmittel (9), die in Bezug auf das Gehäuse (2) und die Betätigungsmittel (6) so ausgebildet sind, dass sie sich dem Durchtritt von Fluid, das aus der außerhalb des Gehäuses (2) befindlichen zweiten äußeren Zone (Z2) stammt, in Richtung des Innenvolumens (3) des Gehäuses über die zweite Öffnung (7) des Gehäuses widersetzen,
- eine dritte Öffnung (10), die sich zwischen dem Innenvolumen (3) des Gehäuses (2) und einer außerhalb des Gehäuses (2) befindlichen dritten äußeren Zone (Z3) erstreckt, die von der ersten und der zweiten äußeren Zone (Z1, Z2) des Gehäuses entfernt ist; und
- dritte Dichtungsmittel (12), die so ausgebildet sind, dass sie sich dem Durchtritt von Fluid zwischen dem Innenvolumen (3) des Gehäuses (2) und der dritten äußeren Zone (Z3) über die dritte Öffnung (10) widersetzen.

10. Sensor nach mindestens einem der Ansprüche 1 bis 9, bei dem die Detektionsmittel (5) elektronische Komponenten umfassen, die zum Innenvolumen (3) beabstandet sind und sich in dem Durchgang (31) des Gehäuses erstrecken.

11. Sensor nach Anspruch 9, bei dem die dritten Dichtungsmittel (12) einen Stopfen (15) umfassen, der in der dritten Öffnung (10) des Innenvolumens (3) montiert ist, wobei dieser Stopfen (15) mittels eines Gewindes am Gehäuse (2) montiert ist.

12. Sensor nach dem vorhergehenden Anspruch, bei dem das bewegliche Teil (4) im Inneren des Innenvolumens (3) des Gehäuses verschiebbar ist und eine Rückstellfeder (17) auf dieses bewegliche Teil (4) eine elastische Rückstellkraft zur Rückstellung in eine erste Position ausübt, wobei diese Rückstellfeder (17) zwischen dem Stopfen (15) und dem beweglichen Teil (4), an denen sie anliegt, zusammengedrückt ist.

13. System, umfassend einen Sensor nach einem der vorhergehenden Ansprüche, kombiniert mit Anspruch 9, wobei dieses System ferner einen Hydraulikzylinder (21) umfasst, der einen Kolben (22) und eine Hydraulikkammer (23) enthält, in der dieser Kolben (22) gleitet, wobei sich die außerhalb des Gehäuses (2) befindliche zweite äußere Zone (Z2) und ein Abschnitt der Betätigungsmittel (6) im Inneren der Hydraulikkammer (23) des Zylinders (21) befinden, derart, dass eine Verschiebung des Kolbens (22) in der Hydraulikkammer (23) die Verschiebung der Betätigungsmittel (6) steuern und die Verschiebung des beweglichen Teils (4) in dem Innenvolumen (3) des Gehäuses (2) des Sensors (1) bewirken kann.

14. System nach Anspruch 13, bei dem der Hydraulikzylinder (21) ein Hydraulikzylinder zum Ausfahren und Einfahren eines Luftfahrzeugfahrwerks ist.

## Claims

1. Sensor (1) comprising:
- a casing (2) delimiting an internal volume (3) internal to the casing and having a passage (31) extending between this internal volume and a first external zone (Z1) external to the casing;
- a moving part (4) able to move inside the said internal volume (3) of the casing;
- detection means (5) for detecting a movement of the said moving part (4) with respect to the casing (2), these detection means (5) comprising a detection portion (51) extending in the passage (31), between the said first external zone (Z1) external to the casing and the said internal volume (3) internal to the casing, this detection portion (51) also having a groove (52) open to the outside of the detection portion (51) for orienting the portion (51) of the detection means (5) relative to the casing (2), this groove (52) extending between the said first external zone (Z1) external to the casing and the said internal volume (3) internal to the casing, **characterized in that** it comprises first sealing means (14) positioned around the detection portion (51) and placed inside the passage (31), these first sealing means (14) being arranged in such a way as to prevent fluid from passing between the internal volume (3) and the first external zone (Z1) external to the casing (2) via said groove (52).

2. Sensor (1) according to claim 1, in which at least one portion of the length of the groove (52) is filled with a sealant (53) arranged to oppose the said passage of fluid between the internal volume (3) and the first external zone (Z1) external to the casing via the said groove (52).

3. Sensor according to Claim 2, in which these first sealing means (14) comprise an annular ring (141) assembled in a sealed manner inside the passage (31) to form a guide sleeve guiding the translational movement of the detection portion (51) inside the passage (31) and with respect to the casing (2), the detection portion (51) being assembled in a sealed manner inside the ring (141), the ring (141) assembled inside the passage (31) and the detection portion (51) assembled inside the ring (141) forming a sealed assembly that opposes the passage of fluid between the internal volume (3) and the first external zone (Z1).

4. Sensor (1) according to Claim 3, in which these first sealing means (14) comprise an annular seal (142) positioned around the ring in such a way as to oppose the passage of fluid, around the outside of the ring (141), between the internal volume (3) and the first external zone (Z1).

5. Sensor according to any one of the preceding claims, in which the detection portion (51) is of right cylindrical shape and extends around and along a longitudinal axis of symmetry (X-X), the said groove (52) being rectilinear and extending parallel to this longitudinal axis of symmetry (X-X).

6. Sensor (1) according to any one of the preceding claims, further comprising securing means (54) arranged on the outside of the casing (2) so as to assemble the detecting means (5) with the casing (2), these securing means (54) having a washer (55) through which washer there passes a part of the detection means (5) which is outside the casing (2) and along which part of the said groove (52) extends, this washer (55) having central (56) and peripheral (57) tabs, the central tab (56) entering the groove (52) so as to prevent relative rotation between the washer (55) and the detection means (5), the peripheral tab (57) entering a complementary housing (58) that is fixed with respect to the casing (2) so as to prevent relative rotation between the washer (55) and the casing (2), this washer (55) being positioned in such a way as to index in terms of rotation the detection means (5) with respect to the casing (2).

7. Sensor (1) according to Claim 6, in which the securing means (54) comprise a mounting plate (59) having a threaded hole (60) into which is screwed that part of the detection means (5) that is outside the casing (2) and along which part of the said groove (52) extends, this mounting plate (59) also being secured against an external surface (61) of the casing (2).

8. Sensor (1) according to Claims 6 and 7, in which the securing means (54) comprise a nut (62) for clamping the washer (55) against the mounting plate (59), this nut (62) being screwed onto that part of the detection means (5) that is outside the casing (2) and along which part of the groove (52) extends.

9. Sensor according to any one of the preceding claims, further comprising:
- actuating means (6) passing through a second opening (7) formed in the casing (2), these actuating means (6) being arranged in such a way as to control the movement of the said moving part (4) situated inside the said internal volume (3) from a second external zone (Z2) external to the casing (2);
- second sealing means (9) arranged with respect to the casing (2) and with respect to the actuating means (6) in such a way as to oppose the passage of fluid from the second external zone (Z2) external to the casing (2) towards the said internal volume (3) of the casing, via the said second opening (7) of the casing,
- a third opening (10) extending between the said internal volume (3) of the casing (2) and a third external zone (Z3) external to the casing and which is distant from the said first and second external zones (Z1, Z2) of the casing; and
- third sealing means (12) arranged in such a way as to oppose the passage of fluid between the said internal volume (3) of the casing (2) and the third external zone (Z3) via the said third opening (10).

10. Sensor according to at least one of claims 1 to 9, in which the detection means (5) comprise electronic components which are situated away from the said internal volume (3) and extend into the said passage (31) of the casing.

11. Sensor according to claim 9, in which the third sealing means (12) comprise a plug (15) assembled in the third opening (10) of the internal volume (3), this plug (15) being assembled with the casing (2) via a screw thread.

12. Sensor according to the preceding claim, in which the moving part (4) is able to slide inside the said internal volume (3) of the casing and a return spring (17) applies to this moving part (4) an elastic return force returning it towards a first position, this return spring (17) being compressed between the plug (15) and the moving part (4) against each of which it rests.

13. System comprising a sensor according to any one of the preceding claims, combined with claim 9, this system further comprising a hydraulic actuating cylinder (21) comprising a piston (22) and a hydraulic chamber (23) in which this piston (22) slides, the said second external zone (Z2) external to the casing (2) and a portion of the actuating means (6) being situated inside the hydraulic chamber (23) of the actuating cylinder (21) so that a movement of the piston (22) in the hydraulic chamber (23) can control the movement of the actuating means (6) and cause the moving part (4) to move inside the internal volume (3) of the casing (2) of the sensor (1).

14. System according to Claim 13, in which the hydraulic actuating cylinder (21) is a hydraulic actuating cylinder that deploys and retracts an aircraft landing gear.
